# EUROPEAN PATENT SPECIFICATION

(11) **EP 3 564 595 B1**
(45) Date of publication and mention of the grant of the patent: **08.04.2026**
(21) Application number: 17885997.1
(22) Date of filing: 28.09.2017
(51) Int. Cl.: F24F 1/0007, F24F 11/871, F24D 11/02

(54) **AIR-SOURCE HEAT PUMP HEATER AND CONTROL METHOD AND DEVICE THEREOF**
HEIZER MIT LUFTQUELLENWÄRMEPUMPE SOWIE STEUERUNGSVERFAHREN UND VORRICHTUNG DAFÜR
DISPOSITIF DE CHAUFFAGE À THERMOPOMPE À AIR, AINSI QUE PROCÉDÉ ET DISPOSITIF DE COMMANDE ASSOCIÉS

(30) Priority: 28.12.2016 CN 201611237151
(43) Date of publication of application: 06.11.2019
(73) Proprietor: Gree Electric Appliances, Inc. of Zhuhai, Zhuhai, Guangdong 519070 (CN)
(72) Inventor: WU, Yimei, Zhuhai Guangdong 519070 (CN); GUI, Tao, Zhuhai Guangdong 519070 (CN); LIU, Caiying, Zhuhai Guangdong 519070 (CN)
(74) Representative: Zacco GmbH
(86) International application number: PCT/CN2017/103957
(87) International publication number: WO 2018/120950

(56) References cited:
- EP-A1- 0 007 860
- EP-A1- 2 330 359
- EP-A1- 3 054 230
- EP-A2- 0 330 701
- CN-A- 1 515 848
- CN-A- 106 016 669
- CN-A- 106 765 764
- CN-B- 101 936 623
- CN-U- 201 811 380
- CN-U- 201 811 380
- DE-A1- 19 646 263
- DE-A1- 2 601 411
- DE-A1- 2 739 373
- US-A1- 2012 036 878
- US-B2- 9 417 638

## Description

### Technical Field

The present invention relates to the technical field of air-source heat pumps, and in particular to an air-source heat pump heater and a control method and apparatus for the air-source heat pump heater.

### Background

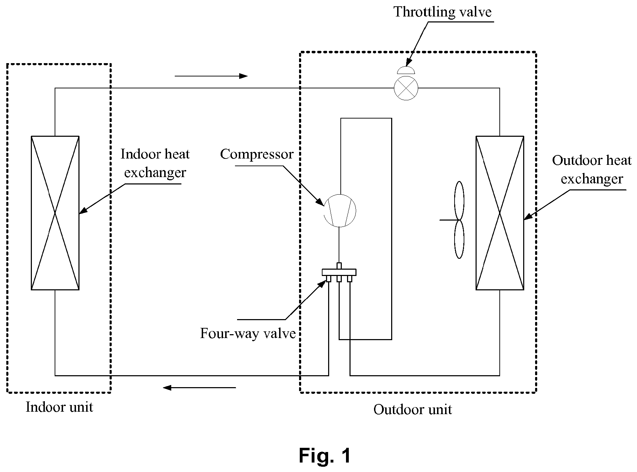

An existing air-source heat pump heater is as shown in Fig. 1, and includes an indoor unit and an outdoor unit. And an indoor heat exchanger is disposed in the indoor unit, and the outdoor unit includes a compressor, an outdoor heat exchanger, a throttling valve, a four-way valve and other components. A working process mainly relies on work of the compressor and thus energy consumption is high.

Concerning a problem of relatively high energy consumption due to a fact that an operation process of an air-source heat pump mainly relies on the compressor in the related art, an effective solution has not been proposed yet.

EP 3 054 230 A1, DE 2601411A1 and EP 0007860A1 provide related technical solutions; however, the above mentioned problem still remains unsolved.

### Summary

The invention provides a control method for an air-source heat pump heater according to claim 1. Embodiments of the invention are defined in the dependent claims.

In an optional embodiment, adjusting the operation speed of the fan in the outdoor unit according to the second temperature difference value and the third temperature difference value includes: calculating a fourth temperature difference value by subtracting the second temperature difference value from the third temperature difference value; and comparing the fourth temperature difference value with a preset temperature difference range; when the fourth temperature difference value is within a first preset temperature difference range, controlling the operation speed of the fan to reduce by a second preset speed value; when the fourth temperature difference value is within a second preset temperature difference range, controlling the operation speed of the fan to increase by a third preset speed value; and when the fourth temperature difference value is within a third preset temperature difference range, controlling the operation speed of the fan to keep unchanged.

In an optional embodiment, before acquiring the temperature information for representing the operation environment where the outdoor unit is located, the method further includes: determining whether an operation time period of the outdoor unit meets a second preset time threshold value or not; and when a determination result is that the operation time period of the outdoor unit meets the second preset time threshold value, acquiring the temperature information for representing the operation environment where the outdoor unit is located.

In another embodiment of the present invention, a control apparatus for an air-source heat pump heater is provided. The air-source heat pump heater may include an indoor unit and an outdoor unit; an outdoor heat exchanger and a fan are disposed in the outdoor unit; a heat absorption film is disposed on a surface of the outdoor heat exchanger; and the apparatus may include: a first acquisition element, configured to acquire temperature information for representing an operation environment where the outdoor unit is located; and a control element, configured to adjust an operation speed of the fan in the outdoor unit according to the temperature information.

In an optional embodiment, the first acquisition element includes: a first acquisition sub-element, configured to acquire first temperature information for representing an internal operation temperature of the outdoor unit; and a second acquisition sub-element, configured to acquire second temperature information for representing an external environmental temperature of the outdoor unit; and the control element includes: a determination sub-element, configured to determine, according to the first temperature information and the second temperature information, illumination intensity information of the operation environment where the outdoor unit is located; and a first control sub-element, configured to adjust the operation speed of the fan in the outdoor unit according to the illumination intensity information.

In an optional embodiment, the determination sub-element includes: a first calculation component, configured to calculate a first temperature difference value by subtracting the second temperature information from the first temperature information; and a comparison determination component, configured to compare the first temperature difference value with a preset temperature difference threshold value, determine, when the first temperature difference value is greater than the preset temperature difference threshold value, the illumination intensity information of the operation environment where the outdoor unit is located as a first illumination intensity, and determine, when the first temperature difference value is smaller than or equal to the preset temperature difference threshold value, the illumination intensity information of the operation environment where the outdoor unit is located as a second illumination intensity; and the first control sub-element includes: a first control component, configured to control, when the illumination intensity information of the operation environment where the outdoor unit is located is determined as the first illumination intensity, the operation speed of the fan to reduce by a first preset speed value; and a second control component, configured to control, when the illumination intensity information of the operation environment where the outdoor unit is located is determined as the second illumination intensity, the operation speed of the fan to keep unchanged.

In an optional embodiment, the first acquisition element further includes: a third acquisition sub-element, configured to acquire, after the operation speed of the fan in the outdoor unit is adjusted according to the illumination intensity information, third temperature information for representing an air pipeline in the outdoor unit at present as well as fourth temperature information for representing a liquid pipeline in the outdoor unit, and calculate a second temperature difference value by subtracting the fourth temperature information from the present third temperature information; and a fourth acquisition sub-element, configured to acquire the third temperature information for representing the air pipeline in the outdoor unit at present as well as the fourth temperature information for representing the liquid pipeline in the outdoor unit again after a first preset time threshold value, and calculate a third temperature difference value by subtracting the fourth temperature information from the present third temperature information; the control element further includes: a second control sub-element, configured to adjust, according to the second temperature difference value and the third temperature difference value, the operation speed of the fan in the outdoor unit; and the second control sub-element includes: a second calculation component, configured to calculate a fourth temperature difference value by subtracting the second temperature difference value from the third temperature difference value; and a comparison control component, configured to compare the fourth temperature difference value with a preset temperature difference range; control, when the fourth temperature difference value is within a first preset temperature difference range, the operation speed of the fan to reduce by a second preset speed value; control, when fourth temperature difference value is within a second preset temperature difference range, the operation speed of the fan to increase by a third preset speed value; and control, when the fourth temperature difference value is within a third preset temperature difference range, the operation speed of the fan to keep unchanged.

In an optional embodiment, the apparatus further includes: a determination element, configured to determine, before the temperature information for representing the operation environment where the outdoor unit is located is acquired, whether an operation time period of the outdoor unit meets a second preset time threshold value or not; and a second acquisition element, configured to acquire, when a determination result is that the operation time period of the outdoor unit meets the second preset time threshold value, the temperature information for representing the operation environment where the outdoor unit is located.

In another embodiment of the present invention, an air-source heat pump heater is provided. The air-source heat pump heater may include an indoor unit and an outdoor unit. An outdoor heat exchanger and a fan are disposed in the outdoor unit, fins are disposed on a surface of the outdoor heat exchanger, and a heat absorption film is disposed on surfaces of the fins.

In an optional embodiment, an indoor heat exchanger, a compressor and a four-way valve are disposed in the indoor unit, and the indoor unit and the outdoor unit are connected respectively via an air pipeline and a liquid pipeline.

In an optional embodiment, a position, corresponding to the outdoor heat exchanger, of a housing of the outdoor unit is provided with a selective penetration layer for blocking a long wave.

In an optional embodiment, a heat absorption coating is sprayed on an inner surface of the housing of the outdoor unit.

In an optional embodiment, an internal temperature sensing wrap for detecting an internal temperature of the outdoor unit is disposed in the outdoor unit, an external temperature sensing wrap for detecting an external environmental temperature of the outdoor unit is disposed out of the outdoor unit, an air pipeline temperature sensing wrap for detecting a temperature of the air pipeline is disposed on the air pipeline, and a liquid pipeline temperature sensing wrap for detecting a temperature of the liquid pipeline is disposed on the liquid pipeline.

In an optional embodiment, an air inlet for intaking air and an air outlet for discharging the air are disposed on the housing of the outdoor unit, and the fan is corresponding to a position of the air outlet.

In an optional embodiment, the air inlet is disposed on an upper portion of the outdoor unit, and the air outlet is disposed on a lower portion of the indoor unit.

In an optional embodiment, a throttling valve is further disposed in the indoor unit.

In an optional embodiment, a first end of the indoor heat exchanger is connected with the throttling valve and is connected with the outdoor heat exchanger via the liquid pipeline, and a second end of the indoor heat exchanger is connected with a first end of the four-way valve; a second end of the four-way valve is connected with a first end of the compressor, and a third end of the four-way valve is connected with the outdoor heat exchanger via the air pipeline; and a second end of the compressor is connected with a fourth end of the four-way valve.

Through the at least some embodiments of the present invention, the heat absorption film is disposed on the surfaces of the fins of the outdoor heat exchanger, solar energy is absorbed by the heat absorption film and is converted into heat energy, and the solar energy is used for performing auxiliary heating on the air-source heat pump, so the problem of the relatively high energy consumption due to the fact that the operation process of the air-source heat pump mainly relies on the compressor in the related art can be effectively solved, and the energy consumption is reduced.

### Brief Description of the Drawings

Fig. 1 is a structural schematic diagram of an air-source heat pump heater in the related art.
Fig. 2 is an optional structural schematic diagram of an air-source heat pump heater according to an embodiment of the present invention.
Fig. 3 is an optional flowchart of a control method for an air-source heat pump heater according to an embodiment of the present invention.
Fig. 4 is another optional flowchart of a control method for an air-source heat pump heater according to an embodiment of the present invention.
Fig. 5 is an optional flowchart of a control apparatus for an air-source heat pump heater according to an embodiment of the present invention.

### Detailed Description

Exemplary embodiments will be described below in detail and examples of these exemplary embodiments are illustrated in accompanying drawings. When the accompanying drawings are involved in the following description, unless otherwise indicated, a same numeral in different accompanying drawings expresses a same or similar element. The implementation manners described in the following exemplary embodiments do not represent all implementation manners consistent with the present invention. On the contrary, these implementation manners only are examples of an apparatus and a method detailed in the appended claims and consistent with the present invention.

### Embodiment One

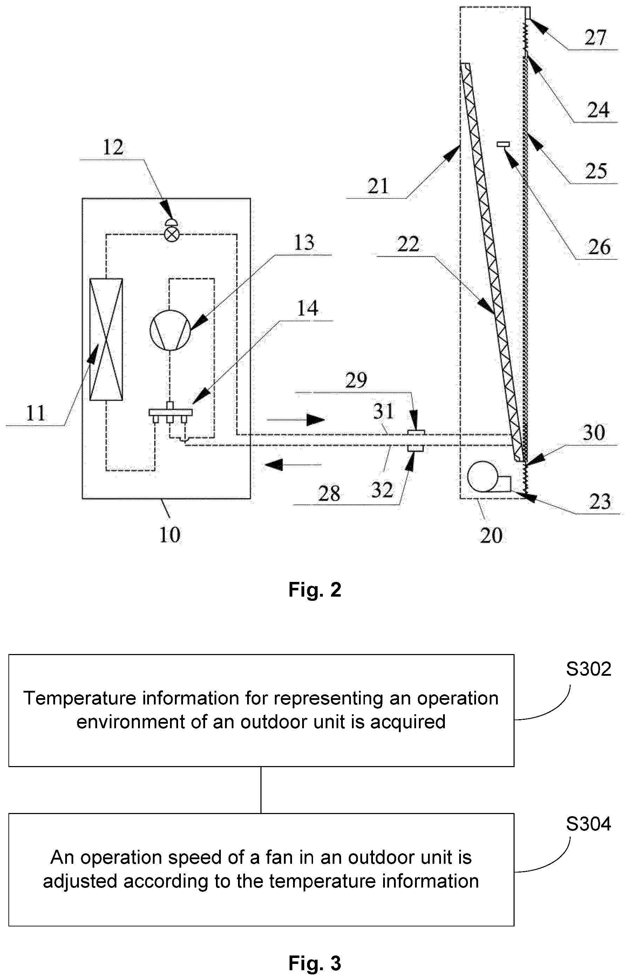

In the embodiment one of the present invention, an air-source heat pump heater is provided. Fig. 2 is an optional structural schematic diagram of the air-source heat pump heater according to an embodiment of the present invention. As shown in Fig. 2, the air-source heat pump heater includes: an indoor unit 10 and an outdoor unit 20. An outdoor heat exchanger 22 and a fan 23 are disposed in the outdoor unit 20. Fins are disposed on a surface of the outdoor heat exchanger 22, and a heat absorption film is disposed on surfaces of the fins. The heat absorption film may absorb solar energy, convert the solar energy into heat energy and heat a coolant in a pipe in a manner of heat conduction. An indoor heat exchanger 11, a throttling valve 12, a compressor 13 and a four-way valve 14 are disposed in the indoor unit 10. The indoor unit and the outdoor unit are connected respectively via an air pipeline 31 and a liquid pipeline 32. A first end of the indoor heat exchanger 11 is connected with the throttling valve 12 and is connected with the outdoor heat exchanger 22 via the liquid pipeline 32. A second end of the indoor heat exchanger 11 is connected with a first end of the four-way valve 14. A second end of the four-way valve 14 is connected with a first end of the compressor 13. A third end of the four-way valve 14 is connected with the outdoor heat exchanger 22 via the air pipeline 31. A second end of the compressor is connected with a fourth end of the four-way valve.

In the above provided structure of the air-source heat pump heater, the heat absorption film is disposed on the surfaces of the fins of the outdoor heat exchanger, the solar energy is absorbed by the heat absorption film and is converted into the heat energy, and the solar energy is used for performing auxiliary heating on the air-source heat pump, so the problem of the relatively high energy consumption due to the fact that the operation process of the air-source heat pump mainly relies on the compressor in the related art can be effectively solved. Compared with a traditional split type air-source heat pump, the solar energy may be used for heating air at an evaporator side, so that an evaporation temperature is improved, and a heating capacity and an energy efficiency of a machine set are improved.

Besides, in a traditional air-source heat pump heater shown in Fig. 1, at least one connecting pipe inside the outdoor unit is not insulated. As a result, when a high-temperature coolant from the compressor is charged to the indoor unit, heat is leaked seriously and system heat is lost. In the structure of the air-source heat pump heater in this embodiment, the compressor and pipe valves corresponding to the compressor are placed at an indoor side, so heat loss of the at least one connecting pipe is reduced. Further, based on the above structure, the structure of the outdoor unit may be simpler. The outdoor unit may be made into an ultrathin outdoor unit and thus is conveniently integrated to a surface of a building. Furthermore, the outdoor unit may be obliquely mounted according to an actual demand.

In an optional embodiment, a position, corresponding to the outdoor heat exchanger 22, of a housing 21 of the outdoor unit 20 is provided with a selective penetration layer 25 for blocking a long wave. The selective penetration layer has a certain strength, may block the long wave and may penetrate a short wave, so a greenhouse effect is disposed in a cavity of the outdoor unit, air is heated and an utilization rate of the solar energy is improved.

Further, a heat absorption coating (not shown in the figure) is sprayed on an inner surface of the housing 21 of the outdoor unit 20. Since the heat absorption coating is sprayed on the inner surface of the outdoor unit, rest solar energy or reflected energy is absorbed conveniently and rest light rays are also absorbed conveniently.

In order to better control the air-source heat pump heater in combination with a temperature, as shown in Fig. 2, an internal temperature sensing wrap 26 for detecting an internal temperature of the outdoor unit is disposed in the outdoor unit 20. An external temperature sensing wrap 27 for detecting an external environmental temperature of the outdoor unit is disposed out of the outdoor unit. An air pipeline temperature sensing wrap 28 for detecting a temperature of the air pipeline is disposed on the air pipeline 31. A liquid pipeline temperature sensing wrap 29 for detecting a temperature of the liquid pipeline is disposed on the liquid pipeline 32.

Further, an air inlet (namely air inlet valve) 24 for intaking air and an air outlet (namely air outlet valve) 30 for discharging the air are disposed on the housing 21 of the outdoor unit 20. And the fan 23 is corresponding to a position of the air outlet 30.

Further, the air inlet is disposed on an upper portion of the outdoor unit, and the air outlet is disposed on a lower portion of the indoor unit. Generally, the air rises after being heated. In order to fully utilize hot air, the fan is disposed on the lower portion, so that the hot air may penetrate the outdoor heat exchanger to strengthen the heat exchange.

A principle of the air-source heat pump heater is illustrated as follows.

When a sun shines, sunlight penetrates the selective penetration layer and one part of the sunlight is absorbed by the heat absorption film on the fins of the outdoor heat exchanger. The heat absorption film converts an optical energy into heat energy and transfers the heat energy to the coolant in the pipe of the heat exchanger in a manner of heat conduction and the like. The other part of the sunlight is absorbed by the air to heat the air. Under the action of the fan, the air enters from the air inlet and exchanges the heat with the outdoor heat exchanger. And after the coolant is heated, the air is discharged from the air outlet. In combination with the two heat transfer manners, an evaporation temperature of a system may be improved, and thus the heating capacity of a machine set is improved.

The indoor unit is composed of the indoor heat exchanger, the compressor, the throttling valve and the like to form a cycle of the heat pump. It is to be noted that only a most fundamental cycle of the heat pump is illustrated in this embodiment, and at least one component may also be increased according to an actual condition so as to improve the process of the cycle.

At present, the connecting pipe of the outdoor door is not insulated generally, so when an outdoor temperature is very low, it is possible that a temperature drop of the coolant between an outlet of the compressor and the indoor heat exchanger is very large and the heat is leaked seriously. Accordingly, by placing components such as the compressor and the valves at an indoor side, and increasing the outdoor temperature, a distance between the compressor and a condenser may be reduced, and the heat leakage is reduced.

With the absence of the components such as the compressor, the outdoor unit may be made ultrathin, and thus is integrated to the surface of the building. Furthermore, the outdoor unit may be obliquely mounted according to the actual demand.

### Embodiment Two

Based on the air-source heat pump heater provided by the embodiment one, a second optional embodiment of the present invention further provides an air-source heat pump heater and a control method for the air-source heat pump heater. Specifically, Fig. 3 is an optional flowchart of a control method for an air-source heat pump heater according to an embodiment of the present invention. The air-source heat pump heater includes an indoor unit and an outdoor unit. An outdoor heat exchanger and a fan are disposed in the outdoor unit. Fins are disposed on a surface of the outdoor heat exchanger and a heat absorption film is disposed on surfaces of the fins. As shown in Fig. 3, the method may include the following steps S302-S304.

At S302, temperature information for representing an operation environment of an outdoor unit is acquired.

During specific implementation, the step that the temperature information is acquired includes: first temperature information for representing an internal operation temperature of the outdoor unit is acquired; and second temperature information for representing an external environmental temperature of the outdoor unit is acquired.

In an optional embodiment, before the temperature information for representing the operation environment where the outdoor unit is located is acquired, a determination step may further be increased to determine whether an operation time period of the outdoor unit meets a second preset time threshold valve or not. When a determination result is that the operation time period of the outdoor unit meets the second preset time threshold valve, the temperature information for representing the operation environment where the outdoor unit is located is acquired.

At S304, an operation speed of a fan in an outdoor unit is adjusted according to the temperature information.

According to the first temperature information and the second temperature information acquired above, illumination intensity information of the operation environment where the outdoor unit is located is determined, and the operation speed of the fan in the outdoor unit is adjusted according to the illumination intensity information.

In the above implementation manner, the heat absorption film is disposed on the surfaces of the fins of the outdoor heat exchanger, solar energy is absorbed by the heat absorption film and is converted into heat energy, and the solar energy is used for performing auxiliary heating on the air-source heat pump, so the problem of the relatively high energy consumption due to the fact that the operation process of the air-source heat pump mainly relies on the compressor in the related art can be effectively solved, and the energy consumption is reduced.

An implementation scheme for determining the illumination intensity information of the operation environment where the outdoor unit is located according to the first temperature information and the second temperature information is further provided. Specifically, in this implementation scheme, a first temperature difference value is calculated by subtracting the second temperature information from the first temperature information; and the first temperature difference value is compared with a preset temperature difference threshold value. When the first temperature difference value is greater than the preset temperature difference threshold value, the illumination intensity information of the operation environment where the outdoor unit is located is determined as a first illumination intensity, and when the first temperature difference value is smaller than or equal to the preset temperature difference threshold value, the illumination intensity information of the operation environment where the outdoor unit is located is determined as a second illumination intensity.

When the illumination intensity information of the operation environment where the outdoor unit is located is determined as the first illumination intensity, the operation speed of the fan is controlled to reduce by a first preset speed value, and when the illumination intensity information of the operation environment where the outdoor unit is located is determined as the second illumination intensity, the operation speed of the fan is controlled to keep unchanged.

The control method is further optimized. Specifically, after the operation speed of the fan in the outdoor unit is adjusted according to the illumination intensity information, third temperature information for representing an air pipeline in the outdoor unit at present as well as fourth temperature information for representing a liquid pipeline in the outdoor unit is acquired, and a second temperature difference value is calculated by subtracting the fourth temperature information from the present third temperature information. The third temperature information for representing the air pipeline in the outdoor unit at present as well as the fourth temperature information for representing the liquid pipeline in the outdoor unit is acquired again after a first preset time threshold value, and a third temperature difference value is calculated by subtracting the fourth temperature information from the present third temperature information. And according to the second temperature difference value and the third temperature difference value, the operation speed of the fan in the outdoor unit is adjusted.

Specifically, when the operation speed of the fan in the outdoor unit is adjusted according to the second temperature difference value and the third temperature difference value, a fourth temperature difference value is calculated by subtracting the second temperature difference value from the third temperature difference value, and the fourth temperature difference value is compared with a preset temperature difference range. When the fourth temperature difference value is within a first preset temperature difference range, the operation speed of the fan is controlled to reduce by a second preset speed value, when the fourth temperature difference value is within a second preset temperature difference range, the operation speed of the fan is controlled to increase by a third preset speed value, and when the fourth temperature difference value is within a third preset temperature difference range, the operation speed of the fan is controlled to keep unchanged.

The control method for the air-source heat pump heater will be further described below in combination with the fourth accompanying drawing and a specific example so as to better understand the scheme.

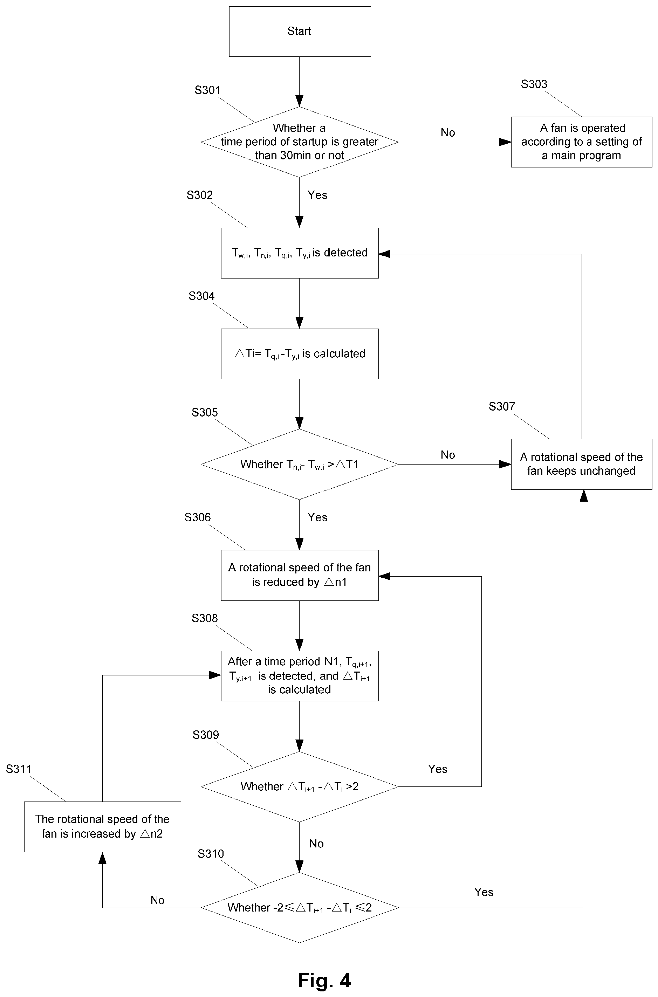

Fig. 4 is one of adoptable control schemes of the control method, and a control principle of the control method is as follows. When an illumination intensity of the sun is large, a rotational speed of the fan is lowed to increase a utilization proportion of solar energy and reduce a power consumption of the fan. When the illumination intensity of the sun is insufficient, a heat exchange manner of the air-source heat pump heater is switched from a current heat exchange manner to a common strong-convection heat exchange manner. During specific control, a heated degree of the air is determined by using a difference between internal and external air temperatures of the outdoor unit and accordingly the rotational speed of the fan is adjusted. An adjustment magnitude of the rotational speed is controlled by using a temperature difference of the coolant going in and out of an outdoor evaporator. Specifically, the method may include the following steps.

At Step S301: whether a time period of startup of a machine set is longer than a second preset time threshold value (such as 30min) is determined. When the time period of startup of the machine set is longer than the second preset time threshold value, the step S302 is entered; or otherwise, the step S303 is performed, and a rotational speed of a fan is adjusted according to a setting of a main program.

At Step S302: an external environmental temperature T_{w,i}, an internal air temperature T_{n,i} of an outdoor unit, a liquid pipeline temperature T_{y,i} and an air pipeline temperature T_{q,i} are detected.

At Step S304: a temperature difference △Tᵢ= T_{q,i}-T_{y,i} is calculated.

At Step S305: whether T_{n,i}-T_{w,i} >△T1 is determined, and the △T1 is a preset temperature threshold value.

When T_{n,i}-T_{w,i} >△T1 is determined, it is indicated that the illumination is strong, the heating effect of the sun to the air is large, the step S306 is entered and the rotational speed of the fan is reduced by △n1, and then, the step S308 is entered. Or otherwise, the step S307 is entered, the rotational speed of the fan keeps unchanged, and the step S302 is returned.

At Step S308: after a time period N1 for adjusting the rotational speed of the fan is adjusted, the air pipeline temperature T_{q,i+1} and the liquid pipeline temperature T_{y,i+1} are detected again. A temperature difference △Tᵢ₊₁= T_{q,i+1}-T_{y,i+1} is calculated (and i is the number of times for detection, i=1 is a first detection, i=2 is a second detection and i+1 is a subsequent one detection of i).

At Step 309: whether △Tᵢ₊₁ -△Tᵢ >2 or not is determined (corresponding to a range of the above first temperature threshold value). When △Tᵢ₊₁ -△Tᵢ >2 is determined, the step S306 is returned, and the rotational speed of the fan is continuously reduced by △n1, and then, the step S308 is reentered; or otherwise, the step S310 is entered.

At Step S310, whether -2≤△Tᵢ₊₁ -△Tᵢ≤2 or not is determined (corresponding to a range of the above second temperature threshold value). When -2≤△Tᵢ₊₁ -△Tᵢ≤ 2 is determined, the step S307 is returned, the rotational speed of the fan keeps unchanged and the step S302 is reentered. Or otherwise (corresponding to a range of the above third temperature threshold value), the step S311 is performed, the rotational speed of the fan is increased by △n2, and the step S308 is re-entered.

### Embodiment Three

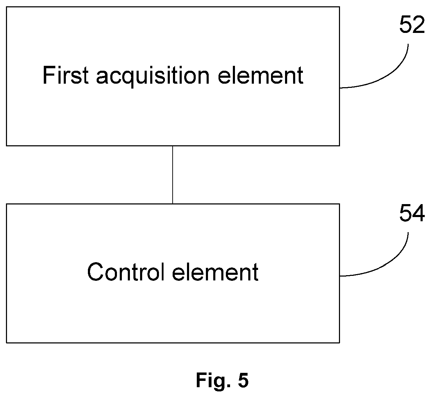

Based on the air-source heat pump heater provided by the embodiment one, and the air-source heat pump heater and the control method for the air-source heat pump heater provided by the embodiment two, an optional embodiment three of the present invention further provides an air-source heat pump heater and a control apparatus for the air-source heat pump heater. The air-source heat pump heater includes an indoor unit and an outdoor unit, and an outdoor heat exchanger and a fan are disposed in the outdoor unit; fins are disposed on a surface of the outdoor heat exchanger. A heat absorption film is disposed on surfaces of the fins. Specifically, Fig. 5 is an optional structural block diagram of the apparatus. As shown in Fig. 5, the apparatus may include: a first acquisition element 52, configured to acquire temperature information for representing an operation environment where the outdoor unit is located; and a control element 54, configured to adjust an operation speed of the fan in the outdoor unit according to the temperature information.

The first acquisition element includes: a first acquisition sub-element, configured to acquire first temperature information for representing an internal operation temperature of the outdoor unit; and a second acquisition sub-element, configured to acquire second temperature information for representing an external environmental temperature of the outdoor unit; and the control element may include: a determination sub-element, configured to determine, according to the first temperature information and the second temperature information, illumination intensity information of the operation environment where the outdoor unit is located; and a first control sub-element, configured to adjust the operation speed of the fan in the outdoor unit according to the illumination intensity information.

The determination sub-element may include: a first calculation component, configured to calculate a first temperature difference value by subtracting the second temperature information from the first temperature information; and a comparison determination component, configured to compare the first temperature difference value with a preset temperature difference threshold value; determine, when the first temperature difference value is greater than the preset temperature difference threshold value, the illumination intensity information of the operation environment where the outdoor unit is located as a first illumination intensity; and determine, when the first temperature difference value is smaller than or equal to the preset temperature difference threshold value, the illumination intensity information of the operation environment where the outdoor unit is located as a second illumination intensity; and the first control sub-element may include: a first control component, configured to control, when the illumination intensity information of the operation environment where the outdoor unit is located is determined as the first illumination intensity, the operation speed of the fan to reduce by a first preset speed value; and a second control component, configured to control, when the illumination intensity information of the operation environment where the outdoor unit is located is determined as the second illumination intensity, the operation speed of the fan to keep unchanged.

The first acquisition element includes: a third acquisition sub-element, configured to acquire, after the operation speed of the fan in the outdoor unit is adjusted according to the illumination intensity information, third temperature information for representing an air pipeline in the outdoor unit at present as well as fourth temperature information for representing a liquid pipeline in the outdoor unit, and calculate a second temperature difference value by subtracting the fourth temperature information from the present third temperature information; and a fourth acquisition sub-element, configured to acquire the third temperature information for representing the air pipeline in the outdoor unit at present as well as the fourth temperature information for representing the liquid pipeline in the outdoor unit again after a first preset time threshold value, and calculate a third temperature difference value by subtracting the fourth temperature information from the present third temperature information; the control element may further include: a second control sub-element, configured to adjust, according to the second temperature difference value and the third temperature difference value, the operation speed of the fan in the outdoor unit; and the second control sub-element may include: a second calculation component, configured to calculate a fourth temperature difference value by subtracting the second temperature difference value from the third temperature difference value; and a comparison control component, configured to compare the fourth temperature difference value with a preset temperature difference range; control, when the fourth temperature difference value is within a first preset temperature difference range, the operation speed of the fan to reduce by a second preset speed value; control, when the fourth temperature difference value is within a second preset temperature difference range, the operation speed of the fan to increase by a third preset speed value; and control, when the fourth temperature difference value is within a third preset temperature difference range, the operation speed of the fan to keep unchanged.

In an optional embodiment, the apparatus may further include: a determination element, configured to determine, before the temperature information for representing the operation environment where the outdoor unit is located is acquired, whether an operation time period of the outdoor unit meets a second preset time threshold value or not; and a second acquisition element, configured to acquire, when a determination result is that the operation time period of the outdoor unit meets the second preset time threshold value, the temperature information for representing the operation environment where the outdoor unit is located.

Regarding the apparatus in the above embodiment, specific manners that each element and component perform at least one operation have been described in detail in the embodiments related to the method, and will not be repeated herein.

It may be seen from the above description that in this embodiment of the present invention, the heat absorption film is disposed on the surfaces of the fins of the outdoor heat exchanger, the solar energy is absorbed by the heat absorption film and is converted into the heat energy, and the solar energy is used for performing auxiliary heating on the air-source heat pump, so the problem of the relatively high energy consumption due to the fact that the operation process of the air-source heat pump mainly relies on the compressor in the related art can be effectively solved, and the energy consumption is reduced.

It is easily conceivable for a person skilled in the art to obtain other implementation schemes of the present invention after considering the specification and practicing the present invention disclosed herein. The scope of the present invention is defined in the appended claims.

## Claims

1. A control method for an air-source heat pump heater, wherein the air-source heat pump heater comprises an indoor unit (10) and an outdoor unit (20); an outdoor heat exchanger (22) and a fan (23) are disposed in the outdoor unit (20); a heat absorption film is disposed on a surface of the outdoor heat exchanger; and the method is **characterized by**
acquiring (S302) first temperature information for representing an internal operation temperature of the outdoor unit; and acquiring second temperature information for representing an external environmental temperature of the outdoor unit;
calculating a first temperature difference value by subtracting the second temperature information from the first temperature information;
comparing the first temperature difference value with a preset temperature difference threshold value, when the first temperature difference value is greater than the preset temperature difference threshold value, determining the illumination intensity information of the operation environment where the outdoor unit is located as a first illumination intensity, and when the first temperature difference value is smaller than or equal to the preset temperature difference threshold value, determining the illumination intensity information of the operation environment where the outdoor unit is located as a second illumination intensity;
when the illumination intensity information of the operation environment where the outdoor unit is located is determined as the first illumination intensity, controlling the operation speed of the fan to reduce by a first preset speed value; and
when the illumination intensity information of the operation environment where the outdoor unit is located is determined as the second illumination intensity, controlling the operation speed of the fan to keep unchanged;
wherein after adjusting the operation speed of the fan in the outdoor unit according to the illumination intensity information, the method further comprises:
acquiring third temperature information for representing an air pipeline in the outdoor unit at present as well as fourth temperature information for representing a liquid pipeline in the outdoor unit, and calculating a second temperature difference value by subtracting the fourth temperature information from the present third temperature information;
acquiring the third temperature information for representing the air pipeline in the outdoor unit at present as well as the fourth temperature information for representing the liquid pipeline in the outdoor unit again after a first preset time threshold value, and calculating a third temperature difference value by subtracting the fourth temperature information from the present third temperature information; and
adjusting the operation speed of the fan in the outdoor unit according to the second temperature difference value and the third temperature difference value.

2. The method as claimed in claim 1, wherein adjusting the operation speed of the fan in the outdoor unit according to the second temperature difference value and the third temperature difference value comprises:
calculating a fourth temperature difference value by subtracting the second temperature difference value from the third temperature difference value; and
comparing the fourth temperature difference value with a preset temperature difference range; when the fourth temperature difference value is within a first preset temperature difference range, controlling the operation speed of the fan to reduce by a second preset speed value; when the fourth temperature difference value is within a second preset temperature difference range, controlling the operation speed of the fan to increase by a third preset speed value; and when the fourth temperature difference value is within a third preset temperature difference range, controlling the operation speed of the fan to keep unchanged.

3. The method as claimed in claim 1, wherein before acquiring the temperature information for representing the operation environment where the outdoor unit is located, the method further comprises:
determining whether an operation time period of the outdoor unit meets a second preset time threshold value or not; and
when a determination result is that the operation time period of the outdoor unit meets the second preset time threshold value, acquiring the temperature information for representing the operation environment where the outdoor unit is located.

## Patentansprüche

1. Steuerungsverfahren für einen Heizer mit Luftquellenwärmepumpe, wobei der Heizer mit Luftquellenwärmepumpe eine Inneneinheit (10) und eine Außeneinheit (20) umfasst; ein Außenwärmetauscher (22) und ein Gebläse (23) in der Außeneinheit (20) angeordnet sind; ein Wärmeabsorptionsfilm auf einer Oberfläche des Außenwärmetauschers angeordnet ist; und das Verfahren durch Folgendes gekennzeichnet ist:
Erlangen (S302) erster Temperaturinformationen zum Darstellen einer internen Betriebstemperatur der Außeneinheit; und Erlangen zweiter Temperaturinformationen zum Darstellen einer externen Umgebungstemperatur der Außeneinheit;
Berechnen eines ersten Temperaturdifferenzwerts durch Subtrahieren der zweiten Temperaturinformationen von den ersten Temperaturinformationen;
Vergleichen des ersten Temperaturdifferenzwerts mit einem voreingestellten Temperaturdifferenzschwellenwert, wenn der erste Temperaturdifferenzwert größer als der voreingestellte Temperaturdifferenzschwellenwert ist, Bestimmen der Beleuchtungsintensitätsinformationen der Betriebsumgebung, wo sich die Außeneinheit befindet, als eine erste Beleuchtungsintensität und, wenn der erste Temperaturdifferenzwert kleiner als oder gleich dem voreingestellten Temperaturdifferenzschwellenwert ist, Bestimmen der Beleuchtungsintensitätsinformationen der Betriebsumgebung, wo sich die Außeneinheit befindet, als eine zweite Beleuchtungsintensität;
wenn die Beleuchtungsintensitätsinformationen der Betriebsumgebung, wo sich die Außeneinheit befindet, als die erste Beleuchtungsintensität bestimmt werden, Steuern der Betriebsgeschwindigkeit des Gebläses, um sich um einen ersten voreingestellten Geschwindigkeitswert zu verringern; und
wenn die Beleuchtungsintensitätsinformationen der Betriebsumgebung, wo sich die Außeneinheit befindet, als die zweite Beleuchtungsintensität bestimmt werden, Steuern der Betriebsgeschwindigkeit des Gebläses, um unverändert zu bleiben;
wobei das Verfahren nach dem Anpassen der Betriebsgeschwindigkeit des Gebläses in der Außeneinheit gemäß den Beleuchtungsintensitätsinformationen ferner Folgendes umfasst:
Erlangen dritter Temperaturinformationen zum Darstellen eines Luftrohrs, das sich aktuell in der Außeneinheit befindet, sowie vierter Temperaturinformationen zum Darstellen eines Flüssigkeitsrohrs in der Außeneinheit und Berechnen eines zweiten Temperaturdifferenzwerts durch Subtrahieren der vierten Temperaturinformationen von den aktuellen dritten Temperaturinformationen;
erneutes Erlangen der dritten Temperaturinformationen zum Darstellen des Luftrohrs, das sich aktuell in der Außeneinheit befindet, sowie der vierten Temperaturinformationen zum Darstellen des Flüssigkeitsrohrs in der Außeneinheit nach einem ersten voreingestellten Zeitschwellenwert und Berechnen eines dritten Temperaturdifferenzwerts durch Subtrahieren der vierten Temperaturinformationen von den aktuellen dritten Temperaturinformationen; und
Anpassen der Betriebsgeschwindigkeit des Gebläses in der Außeneinheit gemäß dem zweiten Temperaturdifferenzwert und dem dritten Temperaturdifferenzwert.

2. Verfahren nach Anspruch 1, wobei das Anpassen der Betriebsgeschwindigkeit des Gebläses in der Außeneinheit gemäß dem zweiten Temperaturdifferenzwert und dem dritten Temperaturdifferenzwert Folgendes umfasst:
Berechnen eines vierten Temperaturdifferenzwerts durch Subtrahieren des zweiten Temperaturdifferenzwerts von dem dritten Temperaturdifferenzwert; und
Vergleichen des vierten Temperaturdifferenzwerts mit einem voreingestellten Temperaturdifferenzbereich; wenn der vierte Temperaturdifferenzwert innerhalb eines ersten voreingestellten Temperaturdifferenzbereichs liegt, Steuern der Betriebsgeschwindigkeit des Gebläses, um sich um einen zweiten voreingestellten Geschwindigkeitswert zu verringern; wenn der vierte Temperaturdifferenzwert innerhalb eines zweiten voreingestellten Temperaturdifferenzbereichs liegt, Steuern der Betriebsgeschwindigkeit des Gebläses, um sich um einen dritten voreingestellten Geschwindigkeitswert zu erhöhen; und, wenn der vierte Temperaturdifferenzwert innerhalb eines dritten voreingestellten Temperaturdifferenzbereichs liegt, Steuern der Betriebsgeschwindigkeit des Gebläses, um unverändert zu bleiben.

3. Verfahren nach Anspruch 1, wobei das Verfahren vor dem Erlangen der Temperaturinformationen zum Darstellen der Betriebsumgebung, wo sich die Außeneinheit befindet, ferner Folgendes umfasst:
Bestimmen, ob ein Betriebszeitraum der Außeneinheit einen zweiten voreingestellten Zeitschwellenwert erfüllt oder nicht; und
wenn ein Bestimmungsergebnis darin besteht, dass der Betriebszeitraum der Außeneinheit den zweiten voreingestellten Zeitschwellenwert erfüllt, Erlangen der Temperaturinformationen zum Darstellen der Betriebsumgebung, wo sich die Außeneinheit befindet.

## Revendications

1. Procédé de commande d'un dispositif de chauffage à thermopompe à air, dans lequel le dispositif de chauffage à thermopompe à air comprend une unité intérieure (10) et une unité extérieure (20) ; un échangeur de chaleur extérieur (22) et un ventilateur (23) sont disposés dans l'unité extérieure (20) ; un film d'absorption de chaleur est disposé sur une surface de l'échangeur de chaleur extérieur ; et le procédé est **caractérisé par**
l'acquisition (S302) d'une première information de température représentative d'une température de fonctionnement interne de l'unité extérieure ; et l'acquisition d'une deuxième information de température représentative d'une température environnementale externe de l'unité extérieure ;
le calcul d'une première valeur de différence de température par soustraction de la deuxième information de température de la première information de température ;
la comparaison de la première valeur de différence de température avec une valeur de seuil de différence de température prédéfinie, lorsque la première valeur de différence de température est supérieure à la valeur de seuil de différence de température prédéfinie, la détermination de l'information d'intensité d'éclairement de l'environnement de fonctionnement où se situe l'unité extérieure comme étant une première intensité d'éclairement, et lorsque la première valeur de différence de température est inférieure ou égale à la valeur de seuil de différence de température prédéfinie, la détermination de l'information d'intensité d'éclairement de l'environnement de fonctionnement où se situe l'unité extérieure comme étant une deuxième intensité d'éclairement ;
lorsque l'information d'intensité d'éclairement de l'environnement de fonctionnement où se situe l'unité extérieure est déterminée comme étant la première intensité d'éclairement, la commande de la vitesse de fonctionnement du ventilateur pour qu'elle diminue d'une première valeur de vitesse prédéfinie ; et
lorsque l'information d'intensité d'éclairement de l'environnement de fonctionnement où se situe l'unité extérieure est déterminée comme étant la deuxième intensité d'éclairement, la commande de la vitesse de fonctionnement du ventilateur pour la maintenir à son niveau actuel ;
dans lequel, après l'ajustement de la vitesse de fonctionnement du ventilateur dans l'unité extérieure selon l'information d'intensité d'éclairement, le procédé comprend en outre :
l'acquisition d'une troisième information de température représentative d'une conduite de vapeur dans l'unité extérieure à l'instant présent, ainsi que d'une quatrième information de température représentative d'une conduite de liquide dans l'unité extérieure, et le calcul d'une deuxième valeur de différence de température par soustraction de la quatrième information de température de la troisième information de température actuelle ;
l'acquisition de la troisième information de température représentative de la conduite de vapeur dans l'unité extérieure à l'instant présent, ainsi que de la quatrième information de température représentative de la conduite de liquide dans l'unité extérieure, à nouveau après une première valeur de seuil de temps prédéfinie, et le calcul d'une troisième valeur de différence de température par soustraction de la quatrième information de température de la troisième information de température actuelle ; et
l'ajustement de la vitesse de fonctionnement du ventilateur dans l'unité extérieure selon la deuxième valeur de différence de température et la troisième valeur de différence de température.

2. Procédé selon la revendication 1, dans lequel l'ajustement de la vitesse de fonctionnement du ventilateur dans l'unité extérieure selon la deuxième valeur de différence de température et la troisième valeur de différence de température comprend :
le calcul d'une quatrième valeur de différence de température par soustraction de la deuxième valeur de différence de température de la troisième valeur de différence de température ; et
la comparaison de la quatrième valeur de différence de température avec une plage de différence de température prédéfinie ; lorsque la quatrième valeur de différence de température est comprise dans une première plage de différence de température prédéfinie, la commande de la vitesse de fonctionnement du ventilateur pour qu'elle diminue d'une deuxième valeur de vitesse prédéfinie ; lorsque la quatrième valeur de différence de température est comprise dans une deuxième plage de différence de température prédéfinie, la commande de la vitesse de fonctionnement du ventilateur pour qu'elle augmente d'une troisième valeur de vitesse prédéfinie ; et lorsque la quatrième valeur de différence de température est comprise dans une troisième plage de différence de température prédéfinie, la commande de la vitesse de fonctionnement du ventilateur pour la maintenir à son niveau actuel.

3. Procédé selon la revendication 1, dans lequel, avant l'acquisition de l'information de température représentative de l'environnement de fonctionnement où se situe l'unité extérieure, le procédé comprend en outre :
la détermination du fait qu'une période de temps de fonctionnement de l'unité extérieure satisfait ou non à une deuxième valeur de seuil de temps prédéfinie ; et
lorsqu'un résultat de détermination indique que la période de temps de fonctionnement de l'unité extérieure satisfait à la deuxième valeur de seuil de temps prédéfinie, l'acquisition de l'information de température représentative de l'environnement de fonctionnement où se situe l'unité extérieure.
